# EUROPEAN PATENT APPLICATION

(11) **EP 1 493 841 A1**
(43) Date of publication of application: **05.01.2005**
(21) Application number: 04253774.6
(22) Date of filing: 24.06.2004
(51) Int. Cl.: C23C 18/18, C04B 41/88, C04B 41/90

(54) **Metallization of ceramics**

(30) Priority: 02.07.2003 US 484341 P
(71) Applicant: Rohm and Haas Electronic Materials, L.L.C., Marlborough, Massachusetts 01752 (US)
(72) Inventor: McCaskie, John E., Princeton, New Jersey 08540 (US); Garay, Henry L., Holbrook, New York 11741 (US)
(74) Representative: Kent, Venetia Katherine

(57) **Abstract**

A method of making a metallized ceramic having a mid-level phosphorous content in one or more metal layers. The metallized ceramic made by the method may be employed in electronic devices.

## Description

### Background of the Invention

The present invention is directed to the metallization of ceramics with a metal phosphorous alloy. More specifically, the present invention is directed to the metallization of ceramics with a metal phosphorous alloy employing a mid-level phosphorous composition.

Metallization of ceramic or glass products generally require a surface activation treatment prior to introduction of the ceramic or glass substrate into a metal plating bath. A typical activation involves immersion into solutions of tin and palladium chlorides.

A serious limitation of this technique is that the metal plated films often have insufficient adhesion to the ceramic material, necessitating additional steps such as etching, or sandblasting to roughen the ceramic surface and allow mechanical interlocking. In order to obtain sufficient adhesion, the first etching treatments in the process are different when different ceramic materials are used and therefore they have to be established separately for every material. In some cases, an adhesive layer may be provided by sputtering, but this method is difficult in connection with components with deep holes or cavities. Additionally, it is often desired to plate only part of an article, requiring masking from the roughening process, activator, or plating solution, or all three. For example, in the case of disc ceramic capacitors, a common practice is to plate the entire body, and then employ grinding to remove plating from the areas where it is unwanted.

In addition to immersion, another conventional method employed is coating by wire paste. An example of such a method is disclosed in U.S. 5,281,326. A ceramic piece is initially washed with an organic detergent in an ultrsound washing machine. After washing the ceramic it is dried. The ceramic is then coated with an electrically conductive paste such as a silver paste containing silver, terpineol, and leaded glass. The silver paste layer is sintered by heating the paste coated ceramic to a temperature of 300° C, then raising the temperature to 850° C for 20 minutes then further to 900° C over 5 minutes after which the ceramic is held at a temperature of 900° C for 15 minutes. The ceramic is then cooled. The silver layer created by the process has a thickness of 5 to 10 microns. In addition to the silver paste, a copper paste also may be employed as an adhesive. After sintering additional metallization may be required as well as additional manufacturing steps. Such paste coating procedures are relatively expensive processes and have relatively low product yields. Accordingly, there is a need for an improved method of metallizing a ceramic.

### Summary of the Invention

The present invention is directed to a method including conditioning a ceramic; applying a catalyst to the ceramic; and plating a metal alloy on the ceramic employing a bath of mid-level phosphorous content.

In another embodiment the invention is directed to a method including conditioning a ceramic; applying a catalyst to the ceramic; plating a metal alloy on the ceramic employing a mid-level phosphorous content bath; and plating a metal or a second metal alloy on the metal alloy deposited on the ceramic from the mid-level phosphorous content bath.

In a further embodiment the invention is directed to a method including conditioning a ceramic; applying a catalyst to the ceramic; plating a metal alloy on the ceramic employing a bath of mid-level phosphorous content; plating a metal or a second metal alloy on the metal alloy deposited on the ceramic from the bath of mid-level phosphorous content; and sintering the metallized ceramic.

In an additional embodiment the invention is directed to a method including conditioning a ceramic; applying a catalyst to the ceramic; plating a metal alloy on the ceramic employing a bath of mid-level phosphorous content; plating a metal or a second metal alloy on the metal alloy deposited on the ceramic from the bath of mid-level phosphorous content; sintering the ceramic with the metal or metal alloy deposits; and forming a pattern on the metallized ceramic.

Another embodiment of the present invention is an article made according to the method of the present invention. The article includes a ceramic substrate with a coating of a metal alloy having a mid-level phosphorous content. The article may have one or more additional layers of metal or metal alloy. The metal alloy layer with the mid-level phosphorous content provides good adhesion with the ceramic layer such that articles made by the methods of the present invention may be employed as components in electronic devices. Articles made by the methods of the present invention eliminate or at least reduce the probability of metal and metal alloy layers separating from their ceramic substrates. Such adhesion improves reliability in electronic devices containing component parts made according to the methods of the present invention.

### Detailed Description of the Invention

As used throughout the specification, the following abbreviations have the following meaning, unless the context clearly indicates otherwise: ° C = degress Centigrade; g = gram; L = liter; mL = milliliter; mg = milligrams; A = amperes; dm = decimeter; and µm = micron = micrometer; ppm = parts per million; Kg = kilograms; nm = nanometers; cm = centimeters; mm = millimeters; Hz = Hertz; KV = kilovolts; µsec = microseconds; 1 mil = 25.4 microns; J = Joules; mJ = milliJoules; ns = nanoseconds; the terms "depositing" and "plating" are used interchangeably throughout this specification. The terms "coating" and "layer" are used interchangeably throughout this specification. All amounts are percent by weight and all ratios are by weight, unless otherwise noted. All numerical ranges are inclusive and combinable in any order except where it is logical that such numerical ranges are constrained up to 100%.

The present invention is directed to a method that includes conditioning a ceramic; applying a catalyst to the ceramic; plating a metal alloy on the ceramic employing a bath of mid-level phosphorous content. The metal alloy, which is deposited on the ceramic substrate from a bath of mid-level phosphorous, acts as an adhesive layer between the ceramic substrate and one or more metal layers or additional metal alloy layers deposited on the metal alloy with the mid-level phosphorous. Surprisingly, a metal alloy having mid-level phosphorous content provides a good adhesive for joining a ceramic to one or more metal or metal alloy layers.

In addition to depositing a mid-level phosphorous content metal alloy on a ceramic, conditioning the ceramic prior to deposition of the metal alloy also assists in improving adhesion. Conditioning steps of the present invention both wet the ceramic substrate to enhance adhesion and promote uniform adsorption of catalytic metals on the ceramic. One or more conditioners that wet a ceramic to enhance adhesion and that promote adsorption of catalytic metals may be employed in the conditioning step of the present invention. Typically the wetting conditioner and the conditioner that promotes uniform adsorption of catalytic metals on a ceramic are different, however, the methods of the present invention do not preclude conditioners having multiple functions.

Examples of suitable conditioners that may be employed for wetting a ceramic substrate include, but are not limited to, conditioners containing alkyl glycosides. Such conditioners typically are alkaline in pH. Examples of such alkyl glycosides have a formula: 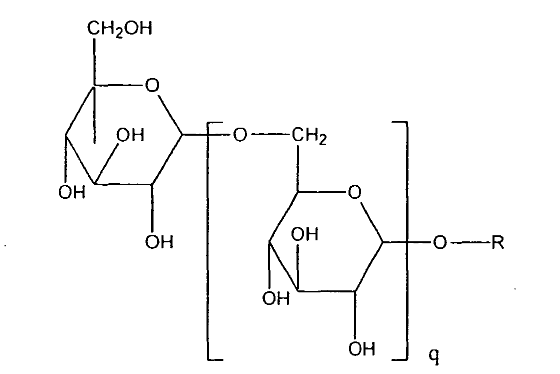 where R is a linear or branched alkyl, for example, such as a C₈ to C₁₆ alkyl group; q is an integer value such as from 0 to 3, or such as 0. Other alkyl glycosides may be employed provided that they provide sufficient wetting to enhance adhesion of a catalyst. Such alkyl glycosides may be employed in amounts such as from 0.25 g/L to 15 g/L, or such as from 1 g/L to 5 g/L.

In addition to one or more alkyl glyosides, the conditioners include one or more alkaline components. Such alkaline components include, but are not limited to, alkaline hydroxides such as potassium hydroxide, sodium hydroxide, or mixtures thereof.

Alkyl glycoside conditioners of the present invention may be obtained commercially or made from methods known in the literature. An example of a suitable commercially available conditioner for wetting a ceramic is TRITON BG-10 surfactant, which is available from Union Carbide Chemicals and Plastics Company, Danbury, CT, U.S.A.

Conditioners used to promote uniform adsorption of catalytic metals to a ceramic substrate include one or more organic amine compounds or their derivatives. Such conditioners also may include one or more surfactants, or one or more metal salts, or mixtures thereof. Such conditioners may be applied to the ceramic substrate after the substrate has been wetted with the conditioner for catalytic adhesion, however, both conditioners may be mixed and applied simultaneously to the ceramic.

Organic amine compounds that may be included in the conditioner that promote catalytic metal adsorption include, but are not limited to, cationic copolymers of diamines and alkyl halides, alkanol amines or mixtures thereof. Such organic amines may be employed in amounts such as from 5 g/L to 200 g/L, or such as from 20 g/L to 140 g/L, or such as from 40 g/L to 110 g/L.

Examples of suitable diamines include, but are not limited to, 1,2-ethylenediamine, 1,3-propanediamine, 1,2-propane diamine, 1,4-butanediamine, 1,5-pentanediamine, 2-methyl-1,5-pentanediamine, or 1,6-hexanediamine. One or more of the foregoing diamines may be polymerized with one or more alkyl halides to form a copolymer. Examples of such alkyl halides include, but are not limited to, 1,2-dichloroethane, 1,3-dichloroproane, 1,4-dichlorobutane, 1,5-dichloropropane, 1,6-dichlorohexane, 1,7-dichloroheptane, or 1,8-dichlorooctane. Typically, cationic copolymers contain a copolymer of 1,6-hexanediamine and 1,2-dichloroethane, or 1,4-butanediamine and 1,2-dichloroethane, or 1,5-pentanediamine and 1,2-dichloroethane. Such copolymers may be obtained commercially or made according to methods disclosed in the literature. An example of a commercially available cationic copolymer is KLARAID PC1185 obtainable from BetzDearbon Limited, Chesire, U.K.

Examples of suitable alkanolamines include, but are not limited to, triethanolamine or monoethanolamine, or mixtures thereof.

In addition to one or more amine compounds, the conditioner for promotion of uniform adsorption of the catalyst may include one or more non-ionic surfactants. Any non-ionic surfactant may be employed provided that it promotes uniform adsorption of a catalyst onto a ceramic. Examples of such non-ionic surfactants include, but are not limited to, octyl phenoxy (polyethyleneoxy) ethanol, nonyl phenoxy (polyethyleneoxy) ethanol, or mixtures thereof. Such surfactants may be obtained commercially or made according to processes disclosed in the literature. An example of a suitable commercially available surfactant is IGEPAL CO-730 obtainable from Rhodia, Chesire, U.K.

Conditioning the ceramic takes from 30 seconds to 5 minutes with each conditioner. Typically, conditioning is from 1 to 3 minutes with each conditioner.

After the ceramic has been conditioned, a catalyst for deposition of a metal alloy is applied to the ceramic. The catalyst employed depends on the metal alloy, which is to be deposited on the ceramic. For example, the following metals may be employed to deposit nickel and cobalt: copper, beryllium, aluminum, carbon, tungsten, tellurium, cobalt, platinum, silver, boron, thallium, vanadium, titanium, nickel, gold, germanium, silicon, molybdenum, selenium, iron, tin, palladium or combinations thereof. Gold, palladium, platinum or tin/palladium are more typically employed as catalysts for the deposition of nickel, cobalt and their alloys. The same metals are catalytic to the deposition of copper, lead, platinum, rhodium, ruthenium, osmium, iridium, iron, carbon, silver, aluminum, gold, palladium, and magnesium. Cobalt, nickel and iron may be used to catalyze the deposition of chromium.

Catalysts may be employed in the form of an aqueous solution, such as an aqueous colloidal solution. They are applied by any suitable method known in the art. For example, such aqueous colloidal catalysts may be applied to a ceramic by immersion or spraying. The catalysts may be made by any suitable method known in the art. Examples of the methods used to make such catalysts are described in U.S. 3,011,920 and U.S. 5,468,597. Any suitable salt of a metal catalyst may be employed. For example, palladium species include, but are not limited to, bis-(benzotriazole) palladium dichloride, palladium dichloride, or disodium palladium tetrachloride (Na₂PdCl₄), tin species include, but are not limited to, sodium stannate (Na₂SnO₃ 3H₂O) and tin chloride (SnCl₂). Other suitable metal salts are well known in the art.

In addition to the catalytic metal salts, catalyst solutions may include additives such as ancillary ligands, salts, buffers, and other materials to enhance catalyst stability. Suitable agents for stabilizing a catalyst solution may vary with the particular catalyst employed. Such additives are well known in the art. For example, a metallization catalyst of PdCl₄²⁻ may be stabilized in aqueous solution by addition of excess chloride ion and by decreasing pH to inhibit formation of oxo-bridged oligomers of the catalyst. Stabilization may be accomplished by adjustment of chloride ion concentration during preparation of the catalyst solution, or by adjustment of chloride ion concentration after the catalyst solution has attained full catalytic activity. In addition to chloride, other anions that prevent the formation of catalyst oligomers also may be suitable agents for stabilizing a catalyst solution, for example, bromide or iodide ions.

An example of a suitable palladium catalyst is:

| **Component** | **Amount** |
|---|---|
| Palladium Dichloride (PdCl₂) | 0.5 to 2 g/L |
| Hydrochloric acid (Concentrated) | 100 to 500 ml/L |
| Sodium Stannate | 0.5 to 5 g/L |
| Additives | As needed |
| Water | To one liter |

An example of another suitable palladium catalyst is:

| **Component** | **Amount** |
|---|---|
| Palladium Dichloride (PdCl₂) | 0.5 to 2 g/L |
| Sodium chloride | 0.5 to 2 g/L |
| SnCl₂ | 5 to 100 g/L |
| Additives | As needed |
| Water | To one liter |

Palladium catalysts that may be employed to practice the present invention are not limited to the two examples above, but variations of the examples may be used.

An example of a suitable gold catalyst is:

| **Component** | **Amount** |
|---|---|
| HAuCl₄ H₂O | 0.5 to 2 g/L |
| SnCl₂ | 5 to 100 g/L |
| Hydrochloric Acid (Concentrated) | 100 to 500 ml/L |
| Sodium Stannate | 0.5 to 5 g/L |
| Additives | As needed |
| Water | To one liter |

An example of a suitable platinum catalyst is:

| **Component** | **Amount** |
|---|---|
| H₂PtCl₆ | 0.5 to 2 g/L |
| Hydrochloric Acid (Concentrated) | 100 to 500 ml/L |
| Sodium Stannate | 0.5 to 5 g/L |
| SnCl₂ | 0.5 to 100 g/L |
| Additives | As needed |
| Water | To one liter |

The gold and platinum catalysts are not limiting but are only exemplary. Variations of the gold and platinum catalysts are well known to those of skill in the art.

Ceramic substrates are immersed in solutions of the catalyst or the catalyst is sprayed onto the area of the ceramic where metal alloy deposition is desired. Duration of contact between the ceramic and the catalyst solution during immersion or spraying depends upon the thickness of catalyst desired on the ceramic. For example, contact may range from 15 seconds to 5 minutes, or from 1 minute to 5 minutes, or longer. The ceramic may optionally be rinsed with water.

Optionally, an accelerator may be applied to the ceramic after the catalyst has been applied and the ceramic rinsed or the accelerator may be included in the catalytic solution. In the case of a tin/palladium catalyst, an accelerator removes tin to expose more palladium for catalytic activity during plating. Accelerators may be applied for 30 seconds or more, or from 2 minutes to 15 minutes. Accelerators are well known in the art. Accelerators may include carboxylic acids such as dicarboxylic acids, halide ions, nitrate salts, amines and their derivatives, ammonia and its derivatives, and mixtures thereof. Examples of suitable carboxylic acids include, but are not limited to, oxalic acid, malonic acid, succinic acid, glutaric acid, adipic acid, maleic acid, fumaric acid, phthalic acid, isophthalic acid, terphthalic acid or mixtures thereof. Typical dicarboxylic acids employed include one or more of oxalic acid, malonic acid, succininc acid, glutaric acid, or adipic acid. More typically oxalic acid, malonic acid, succinic acid or mixtures thereof are used. An example of an ammonia derivative is urea. Examples of suitable halide salts include, but are not limited to, alkali halide salts such as sodium or potassium chloride, or mixtures thereof. Accelerators are commercially available or may be prepared by methods disclosed in the literature.

Accelerators may be applied by immersing a ceramic substrate in a solution of the accelerator or by spraying the substrate with a solution of the accelerator, or combining the accelerator with the catalyst solution. After the accelerator has contacted the substrate for a desired time, the ceramic may optionally be rinsed with water.

An example of a suitable accelerator that may be employed to practice the present invention is:

| **Component** | **Amount** |
|---|---|
| Dicarboxylic Acid | 100 to 200 g/Kg |
| Halide Salt | 150 to 400 g/Kg |
| Nitrate salt | 100 to 400 g/Kg |
| Amine or Ammonia derivative | 50 to 300 g/Kg |

The components of the accelerator may be solubilized in water to make an aqueous solution.

A bath of mid-level phosphorous content containing a metal alloy is contacted with the catalyzed ceramic to deposit the metal alloy on the ceramic. The ceramic may be immersed in the bath or the bath may be applied by spraying it on the ceramic. Mid-level phosphorous baths within the scope of the present invention mean that the bath deposits a metal alloy on the ceramic that has a phosphorous content greater than 4% but less than 5% by weight of the metal alloy deposit. Typically, such mid-level phosphorous baths deposit a metal alloy containing from 4.2% to 4.8% by weight phosphorous. Examples of metal alloy baths that deposit a mid-level phosphorous metal alloy include, but are not limited to, nickel phosphorous electroless plating baths, cobalt phosphorous electroless plating baths and nickel-cobalt phosphorous electroless plating baths.

Electroless nickel baths include, but are not limited to, nickel ions, hypophosphite ions, alkali or alkaline earth metal ions, and optionally buffers, stabilizers, complexing agents, chelating agents, accelerators, inhibitors, brighteners or mixtures thereof.

Nickel ion may be provided by the use of any soluble salt such as nickel sulfate, nickel chloride, nickel sulfamate, nickel salt of an alkyl sulfonic acid, such as nickel salts of methanesulfonic acid, or mixtures thereof. Nickel also may be introduced into a bath as the salt of an acid such as hypophosphorous acid, nitric acid, acetic acid, sulfamic acid, hydrochloric acid, lactic acid, formic acid, propionic acid, trichloroacetic acid, trifluoroacetic acid, glycolic acid, aspartic acid, pyruvic acid or mixtures thereof. Typically, nickel is introduced into solution as nickel sulfate, nickel sulfamate, a nickel salt of alkyl sulfonic acid, such as methanesulfonic acid, or mixtures thereof. The source of nickel ions may be employed in varying amounts to provide nickel ion concentrations such as from 0.1 to 600 g/L, or such as from 1 to 100 g/L, or such as from 5 to 50 g/L.

Hypophosphite may be employed as a reducing agent and is supplied to the bath by any suitable source such as sodium, potassium, ammonium, nickel hypophosphite, or mixtures thereof. Other phosphorous reducing agents may be used. Concentrations of the reducing agent are employed in amounts in excess of the amount sufficient to reduce nickel in the bath. Hypophosphite ion may be employed in amounts of from 5 to 1000 g/L, or such as from 20 to 500 g/L, or such as from 50 to 200 g/L.

Complexing agents and chelating agents may be selected from a wide variety of materials such as monocarboxylic acids or their salts, dicarboxylic acids or their salts, metal salts, ammonia, tartaric acid salts such as Rochelle salts, monoamines, diamines, triamines, alkanolamines, amino acids, boric acid (such as Watts Nickel formulation), pyrophosphate, or mixtures thereof. Specific examples of suitable chelating agents include, but are not limited to, lactic acid, citric acid, maleic acid, propionic acid, acetic acid, malic acid, or salts thereof, glycine or mixtures thereof. Complexing agents may be employed in amounts such as from 0.1 to 300 g/L, or such as from 1 to 200 g/L, or such as from 20 to 100 g/L. Chelating agents may be employed in amounts of from 0.01 gm/L to 20 gm/L, or such as from 0.5 gm/L to 10 gm/L or such as from 2 gm/L to 6 gm/L.

Other ingredients known in the art for use in such plating baths include, but are not limited to, bath stabilizers, accelerators or rate promoters, brighteners, or mixtures thereof. Examples of suitable accelerators include, but are not limited to, thio-compounds such as thiocyanate, thiourea, or mixtures thereof. Such accelerators are employed in amounts of from 0.1 to 2 g/L, or from 0.5 to 1 g/L. The other additives may be employed in conventional amounts, which are well known in the art.

Cobalt ion may be provided by any suitable soluble salt including, but not limited to, cobalt sulfate, cobalt chloride, cobalt sulfamate or mixtures thereof. Concentrations of cobalt ion in solution may vary widely as nickel ion concentrations. Cobalt ion concentrations may range in amounts such as from 0.1 to 100 g/L, or such as from 2 to 20 g/L, or such as from 5 to 10 g/L. Cobalt ion electroless baths also may include additives such as may be employed in nickel elelctroless baths such as stabilizers, complexing agents, accelerators, reducing agents, brighteners, buffers or mixtures thererof described above.

The phosphorous containing reducing agent for cobalt baths may be hypophosphite ion supplied to the bath by any suitable source such as sodium, potassium, ammonium hypophosphite or mixtures thereof. Other phosphorous containing reducing agents may be employed. Concentrations of the reducing agent may be in excess of the amount sufficient to reduce the cobalt ion in the bath such as from 5 to 200 g/L, or such as from 20 to 100 g/L.

Metal alloy plating baths of the present invention also include baths that deposit a nickel/ cobalt/phosphorous alloy. Such baths include the same components in the amounts described above. Such baths include one or more sources of nickel and cobalt ions and phosphorous in addition to other additives disclosed above.

The pH of the plating baths ranges from 4 to 9, or such as from 6 to 8. The pH adjusters include, but are not limited to, ammonium hydroxide, ammonium sulfate, sodium hydroxide, potassium hydroxide, or mixtures thereof. Nickel/cobalt/phosphorous baths typically employ ammonium sulfate as a pH adjuster. The pH adjuster may be employed in amounts such as 10 to 200 g/L or such as from 20 to 100 g/L.

Electroless plating bath temperatures may range from 30° C to 100° C or from 45° C to 75° C during deposition of the metal alloys on a ceramic substrate. A ceramic substrate may be immersed in an electroless bath and may remain in the bath for a sufficient amount of time to plate a metal alloy on the ceramic having a desired thickness. For example, an immersion time of from 15 to 120 minutes or from 30 to 90 minutes may be suitable. Plating thicknesses of a metal alloy may vary in range. For example, plating thicknesses may range from 0.1 mils to 10 mils, or from 1 mil to 5 mils.

Metal alloy deposition rates may vary. Rates may range from 0.8 mils/hour to 5 mils/hour, or at rates of from 0.9 mils/hour to 3 mils/hour. Plating rates may be increased or decreased by raising or lowering the plating bath temperature.

Ceramic substrates that may be employed to practice the present invention include, but are not limited to, aluminas, beryllias, carbides such as silicon carbide, and silicon carbide/beryllia, titanates such as barium titanate, barium strontium titanate, lead zirconium titanate, lead lanthanum zirconium titanate, and nitrides such as silicon nitride. Other suitable ceramics include, but are not limited to, silicates, forsterite, mullite, steatite, porcelains, and mixtures of the foregoing such as cordorite, which is a magnesia, alumina, silica mixture. Other ceramics and mixtures of ceramics may be employed to practice the present invention. Exemplary ceramics include, but are not limited to, SnO₂ 15-20%, ZrO₂ 40-45%, La₂O₂ 0-5%, ZnO 0-5% and TiO₂ 40-45%; and Nd₂O₃ 10-15%, Sm₂O₃ 20-25%, BaCO₃ 20-25%, Bi₂O₃ 0-5%, La₂O₃ 0-5%, TiO₂ 35-40%, ZnO 0-5% and MnCO₃ 0-5%. The foregoing list is not limiting.

After depositing the metal alloy with the mid-level phosphorous content on the ceramic, one or more additional metal alloy layers or metal layers may be deposited on the metal alloy layer containing the mid-level phosphorous. The additional layers may be alternating metal and metal alloy layers. Such additional metal alloys or metal layers may be deposited by any suitable method known in the art. For example, such methods include electroless deposition, immersion deposition, or electrolytic deposition.

Noble as well as non-noble metals and their alloys may be deposited on the mid-level phosphorous containing metal alloy. Examples of suitable precious or noble metals include, but are not limited to, silver, gold, platinum, palladium, iridium, rhodium, osmium, ruthenium, and their alloys. Typically, silver, palladium or gold are deposited on the mid-level phosphorous containing metal alloy. More typically silver is the metal. Any suitable salt of a precious metal may be employed. Examples of such salts include, but are not limited to precious metal salts of alkane sulfonates, alkane sulfonamide, alkane sulfonimide, or mixtures thereof. Other suitable salts of precious metals include, but are not limited to, water-soluble sulfite, sulfate, and sulfonate salts, or mixtures thereof. Halide salts of precious metals also may be employed to provide a source of precious metals. Such salts are included in electroless, immersion and electrolytic baths in varying amounts to provide a desired amount of metal ions. For example, a sufficient amount of a salt or mixture of salts may be employed to provide precious metal ions in amounts such as from 0.1 to 400 g/L or in amounts such as from 1 g/L to 200 g/L.

In addition to the precious metal salts, such baths also include additives such as surfactants, brighteners, stabilizing agents, chelating agents, complexing agents, buffers, accelerators, or mixtures thereof. If the bath is an electroless bath one or more reducing agents is employed. The pH of such baths may range from 0 to 12 and operate at temperature ranges of from 5° C to 100° C.

Electrolytic deposition of a precious metal on a mid- level content phosphorous metal alloy coated ceramic may employ any suitable apparatus known in the art. The mid-level phosphorous metal alloy coated ceramic functions as a cathode in the electroplating process. Any suitable soluble or insoluble electrode may be employed as an anode. Many such suitable electrodes are well known in the art such as a copper soluble electrode or a lead dioxide insoluble electrode.

Current densities for depositing noble metals and their alloys may range from 0.1 to 500 A/dm² or such as from 1 to 100 A/dm² or such from 5 to 50 A/dm². In order to prevent "burning" of areas plated at high current densities and to provide for more even temperature control of the bath, bath agitation may be employed ranging from none to vigorous and more typically moderate to vigorous. Air agitation, mechanical stirring, pumping, cathode rod and other means of solution agitation are suitable. Pulse plating or direct current (DC) plating or a combination of DC and pulse plating may be employed.

When electroless plating is employed, the plating bath also includes a reducing agent. Electroless deposition may occur with or without associated immersion deposition. Examples of suitable reducing agents include, but are not limited to, ascorbic acid, reducing sugars, formaldehyde, or mixtures thereof. Other suitable reducing agents include, but are not limited to, hydroxylamine-O-sulfonic acid, hydroxylammonium methanesulfonate, hydroxylammonium ethanesulfonate, or mixtures thereof.

An example of a suitable aqueous silver solution for electroless plating is:

| **Component** | **Amount** |
|---|---|
| Silver Methanesulfonate | 20 to 30 g/L |
| Hydroxylamine-O-sulfonic Acid | 10 to 30 g/L |
| Methane Sulfonic Acid | 10 to 20% v/v |
| Thiodiglycol | 5 to 30 ml/L |
| Additives | 0.5 to 10 g/L |

An example of a suitable aqueous gold solution for electroless plating is:

| **Component** | **Amount** |
|---|---|
| Gold as Potassium Gold Cyanide | 0.5 to 5 g/L |
| Organic Phosphonic Acid | 50 to 200 g/L |
| Hydrazine Hydrate or Hydroxylamine Phosphate | 0.25 g/L to 1 g/L or 1 g/L to 3 g/L |
| Water | To one liter |

In addition to precious metals, non-precious metals also may be deposited on the mid-level phosphorous content metal alloys deposited on a ceramic. Such non-precious metals include, but are not limited to, copper, zinc, chromium, cadmium, bismuth, nickel, cobalt, indium, and their alloys. Typically, copper and its alloys are deposited on the mid-level phosphorous content metal alloy. Examples of suitable copper alloys include, but are not limited to, copper-silver, copper-tin, copper-bismuth, tin-copper-silver, and tin-copper-bismuth.

As with the precious metals, the non-precious metals such a copper and it alloys may be deposited by electroless or electrolytic deposition. Any suitable source of copper ions may be employed in an electroless or electrolytic bath. Examples of such copper salts include, but are not limited to, copper halides, copper sulfates, copper alkaline sulfonates, copper alkanol sulfonates, or mixtures thereof. Copper sulfate, copper methanesulfonate or copper chloride, or mixtures thereof are typically employed in baths. Copper sulfate or copper sulfonate or mixtures thereof are more typically employed. Such copper compounds are commercially available or may be prepared according to methods in the literature. A sufficient amount of a copper salt is added to a bath such as to provide copper ion concentrations of 0.01 g/L to 200 g/L, or in amounts such as 0.5 g/L to 100 g/L.

In addition to copper salts, copper plating baths may also include additives such as buffers, brighteners, levelers, hardeners, wetting agents, malleability, ductility, and deposition modifiers, suppressors, halide ions, preservatives, stabilizers, or mixtures thereof. Such additives are not limiting and other additives may be included in copper plating baths, which are well known in the art. Such additives may be included in conventional amounts.

An exemplary copper electroplating bath is:

| **Component** | **Amount** |
|---|---|
| Copper Ions (as Copper Sulfate) | 0.01 g/L to 50 g/L |
| Sulfuric acid (concentrated) | 15 to 500 g/L |
| Chloride Ions (as Sodium Chloride) | 1 ppm to 150 ppm |
| Brighteners | I ppm to 100 ppm |
| Additional Additives | As required |
| Water | To one liter |

In an electroplating process the substrate is used as a cathode. A process of pulse plating or direct current (DC) plating or a combination of DC and pulse plating may be employed. Such plating processes are well known in the art. Current densities for non-noble metals may vary such as from 0.5 to 100 A/dm², or such as from 2 to 20 A/dm². Plating baths may be maintained in a temperature range of from 5° C to 100° C. Plating is continued for a time sufficient to form a deposit of desired thickness. For example, plating time may range from 20 minutes to 8 hours or such as from 1 to 5 hours. Metal or metal alloy thicknesses for both noble and non-noble metals may vary in range, for example, thicknesses may range from 0.1 to 10 mils, or such as from 1 to 5 mils.

When substrates are plated by an electrolytic plating process, vertical or horizontal plating processes may be employed. In the vertical process, the substrate is sunk in a vertical position into a container having a plating bath. The substrate, which functions as a cathode, is situated in the vertical position opposite at least one anode. The anode may be a soluble anode or an insoluble anode. The substrate and the anode are connected to a current source. Instead of regulating the current source, there may be a voltage arrangement where the voltage between the substrate and the anode is regulated. Plating solution is directed continuously through the container by means of transporting equipment such as a pump. Such apparatus are well known in the art.

In horizontal plating processes the substrate is transported through a conveyorized unit in a horizontal position with a horizontal direction of movement. Plating bath is injected continuously from below or from above onto the substrate by means of splash nozzles or flood pipes. The anodes are arranged at spacing relative to the substrate and are brought into contact with the plating bath by means of a suitable device. The substrate is transported by means of rollers or plates. Such apparatus are well known in the art.

In electroless copper metal plating baths a reducing agent is included to reduce copper ions in solution to copper metal on the substrate. Such electroless baths may contain additives such as disclosed above for electrolytic copper metal plating baths. An exemplary electroless copper metal plating bath is:

| **Component** | **Amount** |
|---|---|
| Copper Ions (as copper sulfate) | 0.5 g/L to 20 g/L |
| Complexing Agent | 10 g/L to 80 g/L |
| Reducing Agent | 1 g/L to 15 g/L |
| Chelating Agent | 0.1 to 1 g/L |
| Buffer | 1 g/L to 10 g/L |
| Water | To one liter |

Complexing agents employed in electroless copper baths include, but are not limited to, ethylenediaminetetraacetic acid (EDTA), diethylenetriaminepentaacetic acid (DTPA), N-(2-hydroxyethyl) ethylenediaminetriacetic acid, nitriloacetic acid (NTA), monocarboxylic acids, dicarboxylic acids, ammonia, tartaric salts, amino acids, monoamines, diamines, triamines, or mixtures thereof. An example of a suitable reducing agent includes formaldehyde, and a suitable buffer is sodium hydroxide or potassium hydroxide or mixtures thereof.

Plating is accomplished by exposing the catalyzed surface to the plating solution at a temperature of from 20° C to 100° C for a suitable period to deposit a layer of copper having a desired thickness. After plating the substrate is rinsed with water and an anti-tarnish composition such as 20% citric acid may be applied. After anti-tarnishing the substrate may be rinsed with water and air-dried.

One or more metal or metal alloy layers may be deposited on the metal alloy layer having the mid-level phosphorous content. Each layer may vary in thickness. Thicknesses may range from 0.1 mils to 20 mils, or such as from 0.25 mils to 10 mils, or such as from 0.5 to 5 mils, or such as from 1 to 3 mils.

Optionally, metallized ceramics may be sintered. Sintering may be performed by any suitable method and apparatus known in the art. Sintering temperatures may range from 500° C to 2000° C, or such as from 700° C to 1500° C.

Methods of the present invention may be employed to metallize ceramic substrates on one or more surfaces. For example, a ceramic article may be first metallized on one side and then on an opposite side by one or more methods described herein. A ceramic interposed between adjacent metal layers may be employed as a capacitor, for example. Ceramic articles may vary in shape, and the surfaces may be metallized using the methods disclosed herein. Examples of suitable geometric shapes include, but are not limited to, rectangular, elliptical, rhombic and triangular.

A pattern may be formed on the metallized ceramics after which further processing may be performed with the metallized ceramics for use in various electronic devices. Patterned conductive surface layers may find use in both passive and active electronic circuits, display components, resistors, capacitors, electromagnetic interference (EMI) shielding, antennas for radio frequency identification tags (RFID), wireless local area networks (LAN), and proximity detectors as well as antennas for communication such as pagers, cell phones, and satellite reception. Optical surface layers may find application as optical components such as diffractive optical elements and security images, or in telecommunication applications as components that can perform optical switching, modulation, and multiplexing or demultiplexing, optical wave guides, electro-optic filters and modulators, and holograms. Accordingly, the present invention also is directed to an article made by the methods of the invention.

Any suitable method may be employed to form a pattern on a metallized ceramic. One method is by forming imaged coatings with a photosensitive compound. A phototool or mask outlining a desired pattern is placed upon the photosensitive compound coating the metallized ceramic. Actinic radiation is applied to the metallized ceramic to activate the photosensitive compound exposed to the radiation. A suitable developer and then a stripper is applied to complete the desired pattern. An etchant may be employed to remove unwanted metal layers. Many suitable developers, strippers and etchants are well known in the art. The metallized ceramic may then undergo additional process steps to form the final article.

Another suitable method for forming a pattern is by ablation. For example, a reflective, absorptive or diffractive mask defines the desired pattern. As an example, opaque reflective regions and transparent regions define the reflective mask patterns. When a uniform energy flux is incident upon the mask, the energy is reflected by the reflective regions and transmitted by the transparent regions resulting in the exposure of the desired parts or the coating material (corresponding to the pattern) to the energy flux.

An energy source is one that may generate a sufficient range of fluence to the coating surface to result in adequate disruption of the coating-substrate interface. Suitable energy sources include lasers and flashlamps. Operating wavelengths of lasers may go from ultraviolet (UV) to the infrared. Two classes of lasers are described that are suitable for the ablation process.

Excimer lasers are high power lasers that can generate high fluence light in the ultr-violet frequency range. Their lasing capacity is based upon the excitiation of specific diatomic gas molecules. In particular, excimer lasers constitute a family of lasers, which emit light in the wavelength range of 157 to 355 nm. The most common excimer wavelengths and respective diatomic gases are XeCl (308 nm), KrF (248 nm) and ArF (193 nm). The lasing action within an excimer is the result of a population inversion in the excited dimers formed by the diatomic gases. Pulse widths are in the 10ns to 100ns (nanoseconds) resulting in high energy, short pulse width pulses. These characteristics of the excimer laser can lead to sublative or ablative processing conditions for materials with significant absorption within the excimer excitation range depending on the energy output chosen.

Solid state lasers are high power lasers that can generate concentrated light beams from the infrared to the ultra-violet wavelength range. A selected portion of these solid state lasers is based on materials and involves the doping of neodenium into a solid host such as yttrium-aluminum-garnet (YAG), yttrium-lithium-fluoride (YLF), and yttrium vanadate (YVO₅). These particular materials lase at a fundamental wavelength in the infrared wavelength range of 1.04 to 1.08 microns. The lasing can be extended to shorter wavelengths through the use of nonlinear optical crystals such as lithium triborate (LBO) or potassium titanyl phosphate (KTP). As an example, the fundamental 1.06 microns radiation from a neodinium doped YAG laser can be frequency doubled to a wavelength of 532 nm or frequency tripled to 355 nm using these nonlinear crystals. As the excimers, the characteristics of the solid state laser can lead to sublative (i.e. at energy levels below the ablation threshold) or ablative processing conditions for materials in the useable wavelength ranges.

An alternative light source to the excimer laser is a short pulse linear excimer, ultraviolet flashlamp. Typically, such a lamp includes a transparent quartz lamp tube with a wall thickness of 1 mm having an internal bore of 3 to 20 mm in diameter. Such flash lamps may be as long as 30 cm. Electrodes made of tungsten are sealed into the ends of the lamp tube, which is filled with a noble gas such as xenon. The flash lamp is pulsed in the range of 1 to 20 Hz by applying a high voltage in the range of 5 to 40 KV to the electrodes using a capacitor bank. The charge ionizes the xenon atoms to form a plasma which emits a broadband of radiation ranging in wavelengths of from 200 nm to 800 nm. The flashlamp may include a reflector placed partially around the tube to shape and guide the radiation from the lamp toward a mask or workpiece.

Linear flashlamps are capable of producing high intensity, high fluence energy output at shorter wavelengths in relatively short pulses of 5 µsec. For example, it has been found that a xenon linear flashlamp, with a broadband spectral output may provide a useful energy density of from 1.0 to 1.5 J/cm² during a pulse of 2 to 6 µsec.

The depth of ablation may vary widely and depends upon the use intended for the metallized ceramic. A spectrophotometer may be used to determine a suitable optical wavelength and energy source appropriate for disruption of an interface. The coated surface layer of the coated substrate may be placed under the spectrophotometer, such as a Model Lambda 900 available from Perkin-Elmer, Norwalk, Connecticut, and the absorption of the metallized ceramic may be measured as a function of wavelength. Generally, a wavelength of from 200 nm to 2 microns is selected at which the coating has the most absorption. An energy source is then chosen based in part on whether wavelengths in the operating range of wavelengths for the source are sufficiently absorbed by the coating. A rough measure of sufficiency is that absorption is sufficient to ablate the coating.

The following examples assist in illustrating the present invention, but are not intended to limit the scope of the invention.

### Example 1

### Adhesion Test

Twenty commercially available ceramic substrates were plated with nickel phosphorous alloys from four separate electroless nickel phosphorous baths. Each bath had a different composition as disclosed below. Each of the twenty ceramic substrates was a C-14 ceramic composed of SnO₂ 15-20%, ZrO₂ 40-45%, La₂O₂ 0-5%, ZnO 0-5%, and TiO₂ 40-45%.

Prior to metallizing, each ceramic was conditioned with an aqueous, alkaline alkyl glycoside conditioner. Each substrate was immersed in the conditioner for I minute. The substrates were then immersed in a second conditioner, which was a mixture of organic amines and surfactants in water. Each ceramic substrate was immersed in the second conditioner for 1 minute.

After conditioning, each ceramic substrate was immersed in a commercially available aqueous tin/palladium catalyst for 5 minutes to deposit a tin/palladium layer on each ceramic of 0.5 mils. The pH of the catalytic bath was below 1 and the temperature during deposition was 40° C. An accelerator containing oxalic acid, sodium chloride, sodium nitrate and urea was added to the catalytic bath. The accelerator removed tin from the palladium to expose the palladium for catalytic activity.

After a sufficient amount of tin/palladium catalyst was applied to each ceramic, each ceramic was placed in one of four electroless nickel phosphorous plating baths at temperatures of 85° C for 10 minutes to deposit a nickel phosphorous layer on each ceramic of 10 mils. Four ceramics were placed in each of the four baths.

The composition of each bath and the pH of each bath are disclosed in the table below.

| **Component** | **Bath 1** | **Bath 2** | **Bath 3** | **Bath 4** |
|---|---|---|---|---|
| Nickel Sulfate | 550 g/L | 0 | 350 g/L | 400 g/L |
| Sodium Hypophosphite | 300 g/L | 100 g/L | 600 g/L | 600 g/L |
| Nickel Sulfamate | 0 | 50 g/L | 100 g/L | 0 |
| Nickel Chloride | 0 | 0 | 0 | 0 |
| Ammonium Hydroxude | 180 g/L | 300 g/L | 250 g/L | 225 g/L |
| Thio-containing Accelerators | 0.01 g/L | 0 | 0 | 0.01 g/L |
| Chelating Agents | 7 g/L | 10 g/L | 8 g/L | 4 g/L |
| Complexing Agents | 420 g/L | 400 g/L | 500 g/L | 300 g/L |
| Lead (II) Acetate | 0.01 g/L | 0 | 0 | 0.01 g/L |
| Bath pH | 6 | 12 | 10 | 11 |

The nickel phosphorous alloy of bath 1 was deposited at a rate of 0.8 to 1.0 mils/hour. The nickel phosphorous alloy of bath 2 was deposited at a rate of 0.5 to 0.6 mils/hour. The nickel phosphorous alloy of bath 3 was deposited at a rate of 0.1 to 0.2 mils/hour, and the alloy of bath 4 was deposited at a rate of 0.6 to 0.8 mils/hour.

After each ceramic was plated the phosphorous content of each alloy was determined by XRF (X-ray fluorescence) analysis. The metal alloys deposited from bath I had a mid-level phosphorous content of between 4 to 5% by weight of the metal alloy layer on the ceramic. The average phosphorous amount was 4.75%. The metal alloys deposited from bath 2 had a high-level phosphorous content of from 11 to 13% by weight of the metal alloy deposit. The average phosphorous content was 12%. The metal alloys deposited from bath 3 had a high-level phosphorous content of 5 to 6% by weight of the metal alloy. The average phosphorous content was 5.5%. The metal alloys deposited from bath 4 had a high-level phosphorous content of 6 to 9% with an average content of 8%.

Each ceramic was tested for the adhesion of the nickel phosphorous alloy layer using the standard tape test. Multiple slits were made across the deposited metal alloy layers on each ceramic with a sharp edged knife. Adhesive tape was applied with thumb pressure to each metal alloy ceramic and then the tape was removed. The metal alloy layers deposited from bath 1 remained intact as observed with the naked eye. The metal alloy layers from the remaining ceramics deposited from baths 2-4 disengaged from their ceramic substrates. Accordingly, the method and bath of the present invention showed improved adhesion of a nickel phosphorous alloy layer to a ceramic substrate over the other baths.

### Example 2

### Adhesive Test

Twenty ceramic substrates were plated with nickel phosphorous according to the same method described in Example 1 using the same conditioners, catalyst and bath compositions and operating parameters except that the ceramic employed was different. The ceramic was a C-11 ceramic composed of Nd₂O₃ 10-15%, SmO₃ 20-25%, BaCO₃ 20-25%, Bi₂O₃ 0-5%, La₂O₃ 0-5%, TiO₂ 35-40%, ZnO 0-5% and MnCO₃ 0-5%.

The phosphorous content of the metal alloys deposited on the ceramic was the same as in Example 1. The tape test also produced the same results. The bath and method of the present invention showed good adhesion at the interface between the metal alloy and the ceramic. In contrast, the metal alloy layers deposited by the methods and baths 2-4 failed the tape test. The metal alloy layers separated from their ceramic substrates. Accordingly, the method and bath composition of the present invention showed improved nickel phosphorous to ceramic adhesion.

### Example 3

Silver Metal Deposition on a Metal Alloy coated Ceramic A C-11 and C-14 ceramic substrate are conditioned with an aqueous alkaline alkyl glycoside followed by further conditioning each ceramic with a second conditioner composed of an aqueous organic amine and non-ionic surfactant mixture. Each ceramic is immersed in the first conditioner then the second conditioner for 1 to 2 minutes.

Each ceramic is then immersed in a commercially available tin/palladium catalyst for a sufficient amount of time to deposit a catalytic layer on each ceramic of 1 mil. The catalytic bath temperature is 90° C and the pH of the bath is 1. An accelerator is added to the catalytic bath to remove tin from the palladium metal. The accelerator is composed of oxalic acid, sodium chloride, sodium nitrate and urea.

Each catalyst coated ceramic is then immersed into an electroless nickel phosphorous plating bath having the composition disclosed in the table below.

| **Component** | **Amount** |
|---|---|
| Nickel Sulfate | 500 g/L |
| Sodium Hypophosphite | 280 g/L |
| Ammonium Hydroxide | 150 g/L |
| Chelating Agents | 5 g/L |
| Complexing Agents | 300 g/L |
| Lead Acetate | 0.01 g/L |
| Accelerator | 0.01 g/L |

The electroless bath temperature is 80° C and the pH is 7. The plating rate of the nickel phosphorous alloy is 2 mils/hour. The ceramics are removed after a nickel phosphrous layer of 4 mils is formed on each ceramic. The XRF analysis shows that the phosphorous content is at mid-level.

Each ceramic is then plated with a layer of silver metal by immersing each ceramic in an immersion plating silver bath having the composition disclosed below.

| **Component** | **Amount** |
|---|---|
| Silver Ethanesulfonate | 70 g/L |
| 2-Mercaptothiazoline | 40 g/L |
| Thiodiglycol | 40 g/L |

Each ceramic is left in the immersion bath for a sufficient amount of time to deposit a silver layer of 2 mils.

The silver coated ceramics are then sintered at a temperature of 800° C and then allowed to cool to room temperature for further processing.

A pattern is then formed on the silver layer of each ceramic using laser ablation. A patterning mask having a desired pattern is placed on the silver layer. A laser light beam is formed by an ultraviolet energy source (model LPX 315 150 watt Excimer laser available from Lambda Physik of Germany) utilizing krypton fluoride (KrF) gas to produce ultraviolet radiation at 248 nm. The source is operated to form a beam with a repetition rate of 75 Hz, a pulse width of 10 ns and an energy output of 750 mJ per pulse.

After the silver layer is patterned the resulting article may be further processed by methods known in the art to form an article used in EMI shielding, or other component for an electronic device.

### Example 4

### Gold Metal Deposition on a Metallized Ceramic

A gold metal is plated on a C-11 and C-14 ceramic after metal alloy deposition according to the same process as described in Example 3.

The gold is deposited on the nickel phosphorous layer by an immersion plating process using the bath described below.

| **Component** | **Amount** |
|---|---|
| Gold as Potassium Gold Cyanide | 2 g/L |
| Organic Phosphonic Acid | 150 g/L |
| Hydrazine Hydrate | 0.5 g/L |

The pH of the bath is 7 with a temperature of 90° C. Each ceramic is immersed in the gold bath for 15 minutes. The deposit thickness on each ceramic is 3 mils. The gold coated ceramic is sintered at 900° C. The gold metal layer is then patterned as in Example 3.

The gold plated metallized ceramic may be further processed and employed as a component in an electronic device.

### Example 5

### Copper Coated Metallized Ceramic

A C-11 and C-14 ceramic are conditioned by first immersing each ceramic in an aqueous alkaline alkyl glycoside. Potassium hydroxide is employed to maintain the alkaline condition of the first conditioner. Each ceramic is immersed in the conditioner for 2 minutes at 20° C.

Each ceramic is then immersed in a second aqueous conditioner containing a mixture of alkanolamines, cationic copolymer surfactants, non-ionic surfactants and copper salts. Each ceramic is immersed in the conditioner for 60 seconds at a temperature of 20° C.

After conditioning, each ceramic is immersed into an aqueous colloidal solution of a tin/palladium catalyst having the formulation described in the table below. The pH of the catalytic bath is 1 and the temperature is 95° C. Each ceramic is placed in the bath such that a catalytic layer of 1 micron is formed. An accelerator composed of oxalic acid (170 g/Kg), sodium chloride (300 g/Kg), sodium nitrate (300g/Kg) and urea (100 g/Kg) is included in the catalytic bath.

| **Component** | **Amount** |
|---|---|
| Palladium Dichloride (PdCl₂) | 1 g/L |
| Hydrochloric Acid (Concentrated) | Sufficient amount to solubilize palladium dichloride |
| Sodium Stannate | 2 g/L |
| Tin Dichloride (SnCl₂) | 5 g/L |
| Water | To one liter |

The catalyst coated ceramics are removed from the catalytic bath and rinsed with deionized water then immersed in an electroless nickel phosphorous bath at a temperature of 100° C, and a pH of 8 for a sufficient amount of time to form a 5 mils layer of nickel phosphorous alloy on each ceramic with a mid-level phosphorous content. The deposition rate of the nickel phosphorous alloy is 2 mils/hour. The composition of the electroless bath is:

| **Component** | **Amount** |
|---|---|
| Nickel Sulfamate | 200 g/L |
| Sodium Hypophosphite | 500 g/L |
| Lead (II) Acetate | 0.05 g/L |
| Sodium Thiocyanate | 0.05 g/L |
| Ammonium Hydroxide | 150 g/L |
| Chelating Agents | 8 g/L |
| Complexing Agents | 230 g/L |
| Water | To one liter |

Chelating agents include cadmium salts, carboxylic acids such as citric acid, malic acid, and acetic acid. Complexing agents include methylene succinic acid, sodium tetraborate and amino acetic acid.

Each metal alloy coated ceramic is then immersed in an aqueous tin/palladium catalyst colloidal solution having the formula disclosed below to prep the substrate for electroless copper metal plating.

| **Component** | **Amount** |
|---|---|
| Palladium Dichloride | 0.15 g/L |
| Stannous Chloride | 20 g/L |
| Sodium chloride | 200 g/L |
| Hydrogen Chloride | 5 g/L |
| Resorcinol | 1 g/L |

The pH of the catalyst solution is less than 1 and each ceramic is immersed in the catalyst solution for 5 minutes. The substrates are removed and rinsed with deionized water then immersed in an electroless aqueous copper bath having the composition disclosed below.

| **Component** | **Amount** |
|---|---|
| Copper Sulfate | 10 g/L |
| Ethylenediamine tetra-2-hydroxypropanol | 15 g/L |
| Formaldehyde | 6 g/L |
| Block Copolymer Wetting Agent | 10 mg/L |
| Sodium Cyanide | 10 mg/L |
| Sodium Hydroxide | To pH 13 |

Each substrate is immersed in the copper bath for a sufficient amount of time to deposit a copper layer of 5 mils. The bath is operated at 20° C.

The copper and nickel alloy coated ceramic may be employed in an electronic device as is, or it may undergo further processing such as forming a pattern on the copper layer using an ablation process and then employed in an electronic device.

### Example 6

### Copper Coated Metallized Ceramic

Ceramics C-11 and C-14 are coated with a nickel phosphorous alloy as described in Example 5. The metal alloy coated ceramics are then coated with copper using an electrolytic aqueous copper bath described in the table below.

| **Component** | **Amount** |
|---|---|
| Copper sulfate Pentahydrate | 80 g/L |
| Sulfuric Acid (Concentrated) | 225 g/L |
| Chloride (as Sodium chloride) | 50 ppm |
| Polyethylene Oxide (Suppressor) | 1 g/L |
| Bissulfopropyl Disulfide (brightener) | 1 ppm |
| Water | To one liter |

Each metal alloy substrate is joined to a power source in electrical continuity with a lead dioxide insoluble electrode such that a current density of 1 to 5 A/dm² is employed to deposit copper metal on the nickel phosphorous layer of the ceramic. The ceramic acts as a cathode and the lead dioxide insoluble electrode is the anode. The temperature of the copper bath is 30° C. Copper electroplating is performed until a copper layer of 2 mils is deposited on the nickel phosphorous layer.

Each copper coated, metal alloy ceramic may be employed in an electronic device or further processed as desired and then employed as a component in an electronic device.

## Claims

1. A method comprising:
a) conditioning a ceramic;
b) applying a catalyst to the ceramic; and
c) plating a metal alloy on the ceramic employing a bath of mid-level phosphorous content.

2. The method of claim 1, wherein the metal alloy comprises nickel phosphorous, cobalt phosphorous, or nickel-cobalt phosphorous.

3. The method of claim 1, wherein a rate of metal alloy deposition ranges from 0.8 mils/hour to 5 mils/hour.

4. The method of claim 1, wherein a pH of the bath ranges from 5 to 8.

5. The method of claim 1, further comprising depositing one or more metal layers, or one or more metal alloy layers, or a combination of one or more metal and metal alloy layers on the metal alloy deposited from the mid-level phosphorous content bath.

6. The method of claim 5, further comprising a sintering process.

7. The method of claim 5, further comprising a step of forming a pattern on a top metal layer or a top metal alloy layer.

8. A method comprising:
a) conditioning a ceramic with an alkaline alkyl glycoside composition and an aqueous organic amine and surfactant composition;
b) applying a catalyst with an accelerator to the ceramic;
c) depositing a metal alloy on the ceramic employing a bath of mid-level phosphorous content;
d) depositing a metal or a metal alloy on the metal alloy deposited on the ceramic from the bath of mid-level phosphorous content to form a metallized ceramic; and
e) sintering the metallized ceramic.

9. The method of claim 8, wherein a phosphorous content of the metal alloy deposited from the mid-level phosphorous content bath is greater than 4% but less than 5% by weight of the metal alloy.

10. An article comprising a ceramic having one or more metal alloy layers comprising a mid-level amount of phosphorous.
